(19) Europäisches Patentamt

European Patent Office

Office européen des brevets

(11) Veröffentlichungsnummer: **0 191 267**
**B1**

(12) **EUROPÄISCHE PATENTSCHRIFT**

(45) Veröffentlichungstag der Patentschrift: **06.06.90**

(21) Anmeldenummer: **85810290.8**

(22) Anmeldetag: **24.06.85**

(51) Int. Cl.⁵: **A 47 J 27/16**

(54) Dämpfer.

(30) Priorität: **21.01.85 CH 253/85**

(43) Veröffentlichungstag der Anmeldung:
**20.08.86 Patentblatt 86/34**

(45) Bekanntmachung des Hinweises auf die
Patenterteilung:
**06.06.90 Patentblatt 90/23**

(84) Benannte Vertragsstaaten:
**AT BE CH DE FR GB IT LI LU NL SE**

(56) Entgegenhaltungen:
**CH-A- 169 991**
**FR-A-1 414 942**
**FR-A-2 201 747**
**FR-A-2 458 260**
**GB-A- 876 976**
**US-A-2 427 361**

(73) Patentinhaber: **Menu-System Ernst Wüst**
**Rorschacherstrasse 127**
**CH-9000 St. Gallen (CH)**

(72) Erfinder: **Wüst, Ernst**
**Kamorastrasse 4**
**CH-9030 Abtwil (CH)**

(74) Vertreter: **Kulhavy, Sava, Dipl.-Ing.**
**Patentanwaltsbüro S.V. Kulhavy Postfach 450**
**Kornhausstrasse 3**
**CH-9001 St. Gallen (CH)**

Courier Press, Leamington Spa, England.

EP 0 191 267 B1

**Beschreibung**

Die vorliegende Erfindung betrifft einen Dämpfer mit einem Behälter, welcher zur Aufnahme der zu behandelnden Nahrungsmittel bestimmt ist, wobei dieser Behälter vorne mit Hilfe einer Tür verschliessbar ist, mit einem Dampferzeuger, welcher einen Erhitzer enthält, dessen Einlass an eine Kaltwasserzuleitung angeschlossen ist, und mit einer Steuervorrichtung, welche die Zusammenarbeit der einzelnen Bestandteile des Dämpfers steuert und wobei der Dampferzeuger einen zweiten Erhitzer aufweist, der zur Erhitzung des aus dem ersten Erhitzer austretenden Dampfes bestimmt ist.

Ein Dämpfer dieser Gattung ist aus FR—PS—2 201 747 bekannt. Dieser Dämpfer weist ein Gehäuse auf, welches zur Aufnahme von zu behandelndem Gut bestimmt ist. Im unteren Bereich des Innenraumes dieses Behälters ist ein erster Erhitzer untergebracht, welcher zur Erhitzung von Wasser bestimmt ist. Im oberen Bereich des Gehäuseinnenraumes befindet sich ein zweiter Heizkörper, welcher zur Erhitzung des durch die Einwirkung des ersten Erhitzers erzeugten Dampfes bestimmt ist.

In einem solchen Dämpfer kann das Gut zwar mit überhitztem Dampf behandelt werden, aber es dauert verhältnismässig lange, bis die Menge von Wasser, welches zunächst die Temperatur der Wasserleitung aufweist, so weit erhitzt wird, dass Dampf entsteht. Es gibt Anwendungsfälle, wie z.B. Sterilisatoren, in welchen es nicht stört, dass Dampf erst nach einer längeren Zeitspanne erzeugt wird. Bei der Erwärmung von tiefgefrorenen Speisen in der Gastronomie, wo die Besucher auf bestellte Mahlzeiten warten, wäre der bekannte Dämpfer nicht verwendbar.

Ein weiterer Nachteil des vorbekannten Dämpfers besteht darin, dass die Erhitzer als elektrische Heizkörper ausgeführt sind, welche sich im Inneren des Behälters befinden. Da solche Heizkörper eine Wärmeträgheit aufweisen, kann sich das Bedienungspersonal beim Be- und Entladen des Gerätes an den Heizkörpern verletzen.

Die Aufgabe der vorliegenden Erfindung ist, einen Dämpfer anzugeben, der die genannten Nachteile nicht aufweist.

Diese Aufgabe wird erfindungsgemäss so gelöst, wie dies im kennzeichnenden Teil des Anspruchs 1 definiert ist.

Nachstehend werden Ausführungsbeispiele der vorliegenden Erfindung anhand der beiliegenden Zeichnungen näher erläutert. Es zeigt:

Fig. 1 schematisch den vorliegenden Dämpfer,

Fig. 2 in Seitenansicht einen ersten Erhitzer des Dämpfers gemäss Fig. 1, wobei dieser Erhitzer aus Platzgründen in der Zeichnung liegend dargestellt ist,

Fig. 3 in Draufsicht den Erhitzer nach Fig. 2,

Fig. 4 in Seitenansicht einen zweiten Erhitzer des Dämpfers nach Fig. 1,

Fig. 5 in Frontansicht der Erhitzer nach Fig. 4,

Fig. 6 in Seitenansicht die Tür des Dämpfers nach Fig. 1,

Fig. 7 in Frontansicht ein Verteilorgan für Dampf, das im Garraum des Dämpfers nach Fig. 1 untergebracht ist und

Fig. 8 in Seitenansicht das Verteilorgan gemäss Fig. 7.

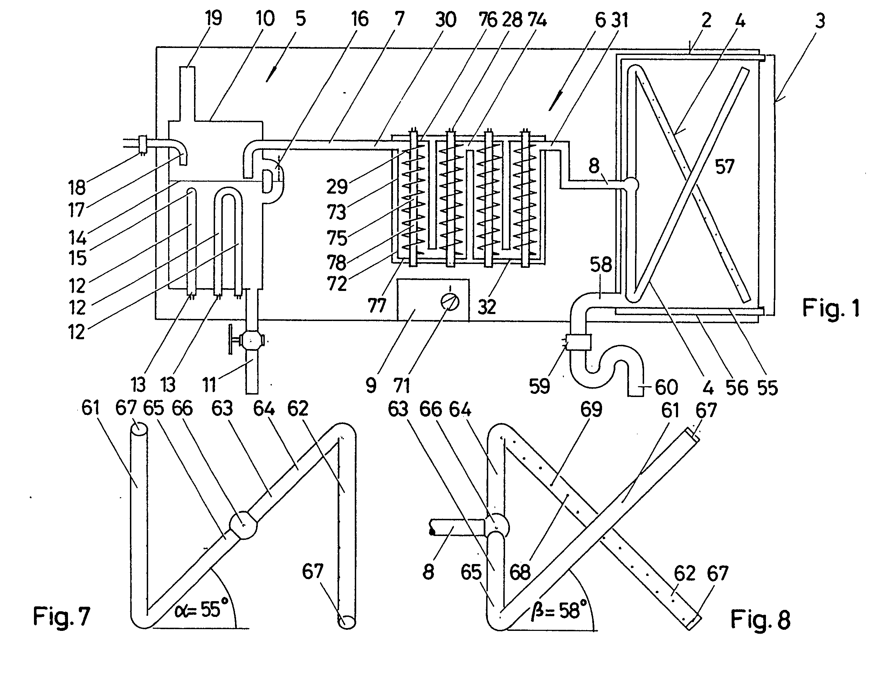

Der in Fig. 1 dargestellte Dämpfer weist ein Gehäuse 1 auf, in dem ein zur Aufnahme des zu behandelnden Guts (nicht dargestellt) bestimmter Behälter 2 untergebracht ist. Dieser Behälter 2, den wir auch als Garraum bezeichnen werden, ist vorne mit Hilfe einer Tür 3 verschliessbar. Im Garraum 2 ist ein Verteilorgan 4 für Dampf angeordnet. Die mittlere Partie des Verteilorgans 4 ist im Bereich der Hinterwand des Behälters 2 befestigt. Im Inneren des Gehäuses 1 des vorliegenden Dämpfers befindet sich ferner ein erster Erhitzer 5, der zur Erzeugung von Nassdampf aus Leitungswasser bestimmt ist. An diesen ersten Erhitzer 5 ist ein zweiter Erhitzer 6 über ein Verbindungsrohr 7 angeschlossen, der zur Erhitzung von aus dem ersten Erhitzer 5 austretendem Dampf dient. Der zweite Erhitzer 6 ist über ein zweites Verbindungsrohr 8 an das Verteilorgan 4 und somit auch an dem Garraum 2 angeschlossen. Der Dämpfer weist auch eine elektronische Steuervorrichtung 9 auf, welche die Zusammenarbeit der einzelnen Teile des Dämpfers nach vorgegebenen Programmen steuert und welche in Fig. 1 nur schematisch dargestellt ist.

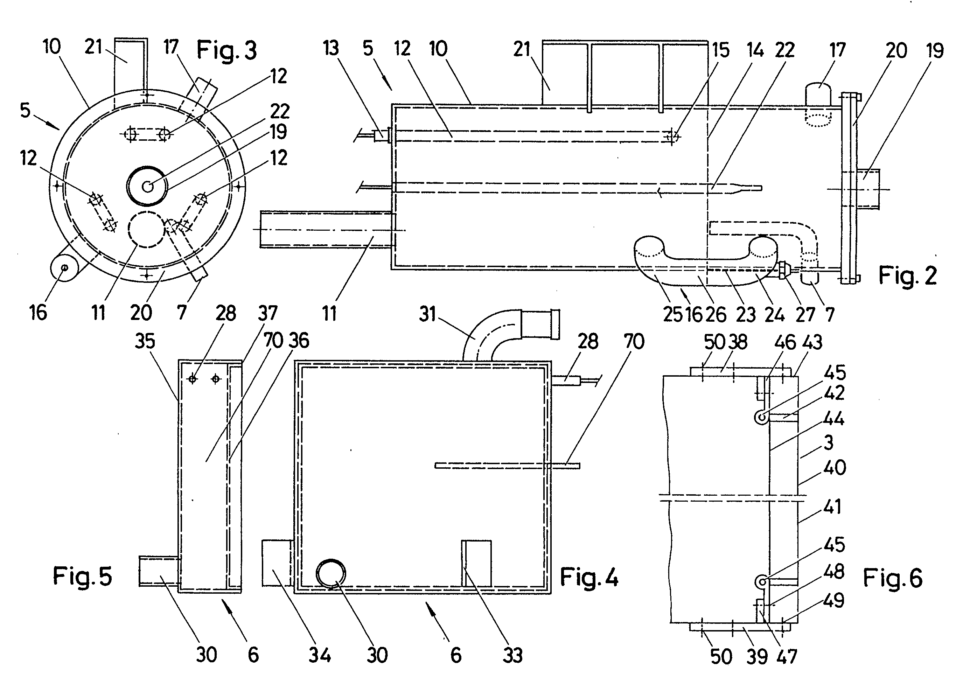

Wie aus Fig. 1 ersichtlich ist, weist der erste Erhitzer 5 einen im wesentlichen zylinderförmigen Kessel 10 auf, wobei die Achse dieses Kessels vertikal verläuft. Aus Platzgründen ist der Kessel 2 in Fig. 2 liegend dargestellt. Die untere Partie des Kessels 10 ist mit einem gesteuert verschliessbaren Auslass 11 versehen, dessen Zweck hier noch beschrieben sein wird. Im unteren Bereich des Kessels 10 befinden sich stabförmige une vertikal angeordnete elektrische Heizkörper 12, die etwa parallel zueinander stehen. Das untere und ausserhalb des Kessels 10 liegende Ende 13 der Heizkörper 12 ist als eine Anschlusstelle 13 für Drähte (nicht dargestellt) ausgebildet, die die Heizkörper 12 mit elektrischer Energie versorgen. Aus Fig. 3 geht hervor, dass die Heizkörper 12 im wesentlichen U-förmig sind, wobei die Enden der Schenkel solcher Heizkörper 12 im Boden des Kessels befestigt sind und die genannten Anschlüsse 13 tragen. Der Wasserspiegel 14 im Kessel 10 muss sich während des Betriebes des Dämpfers über den oberen Enden 15 der Heizkörper 12 befinden. Hierfür sorgt ein elektronischer Pegelmesser, dessen Abtaster 16 am Kessel 10 angebracht ist.

Im oberen Abschnitt weist der Mantel des Kessels 10 einen Kaltwasseranschluss 17 mit einem elektronisch gesteuerten Ventil 18 sowie eine Anschlusstelle für das bereits genannte erste Verbindungsrohr 7 auf. Oben befindet sich ferner ein Stutzen 19 zur Einfüllung einer Entkalkungssubstanz, wobei dieser Stutzen 19 am Deckel 20 des Kessels 10 ausgeführt ist, der am Kesselmantel angeschraubt ist. Der Kesselmantel ist mit einer Konsole 21 versehen, die die Befestigung des Kessels 10 in vertikaler Lage innerhalb des Dämpfergehäuses 1 ermöglicht. Durch den Kessel 10 erstreckt sich ein Temperaturfühler 22, der im Boden des Kessels 10 befestigt ist und der an die genannte Steuervorrichtung 9, gleich wie eine Sonde 23 im Abtaster 16 des Pegelmessers, angeschlossen ist.

Der Abtaster 16 des Pegelmessers enthält ein etwa U-förmiges Rohr, das an den Mantel des Kessels 10 strömungsmässig angeschlossen ist, so dass Wasser auch in das Pegelmesserrohr 16 hineinfliessen kann. Das Pegelmesserrohr besteht aus zwei gekrümmten Schenkeln 24 und 25, die an den Kesselmantel einerends angeschlossen sind, und aus einem geraden und die Schenkel 24 und 25 verbindenden Rohrstück bzw. Steg 26. Die bereits genannte Sonde 23 des Pegelmessers, die an den in der Steuervorrichtung 9 befindlichen elektronischen Teil des Pegelmessers angeschlossen ist, ist im wesentlichen stabförmig, deren Längsachse liegt etwa parallel zur Längsachse des Kessels 10 und sie durchsetzt den oberen Schenkel 24 des U-förmigen Rohres des Abtasters 16. In Fig. 2 ist auch eine Verschraubung 27 dargestellt, mit deren Hilfe die Sonde 23 im Schenkel 24 des Rohres 16 in vertikaler Lage gehalten ist.

Der zweite Erhitzer 6 (Fig. 4 und 5) weist ein quaderförmiges Gehäuse auf, das mit einem ersten Stutzen 30 für den Anschluss des Zuführrohres 7 vom ersten Erhitzer 5 und mit einem zweiten Stutzen 31 zum Anschluss des zum Garraum 2 führenden Rohres 8 versehen ist. Im Inneren des zweiten Erhitzers 6 befindet sich ein Heizkörper 32 (Fig. 1), von dem in Fig. 4 und 5 nur die elektrischen Anschlüsse 28 desselben gezeigt sind. Der Heizkörper 32 weist einen mäanderförmig verlaufenden Mantel 72 für den zu erhitzenden Dampf auf. Der Anfang und das Ende dieses Mantels 72 ist an die Stutzen 30 bzw 31 angeschlossen.

Der rechtwinklig gebrochen verlaufende Mantel 72 enthält längere parallele Abschnitte 73 sowie kürzere parallele Abschnitte 74, wobei diese letzten Abschnitte 74 als Verbindungskanäle für die längeren Abschnitte 73 dienen, in welchen Dampf erhitzt wird. Durch die längeren Abschnitte 73 des Mantels 72 erstrecken sich Rohre 75, die in den Stirnwänden 76 und 77 dieser Abschnitte 73 luftdicht befestigt sind. Die im Inneren der längeren Abschnitte 73 befindliche Oberfläche der Rohre 75 ist mit einer umlaufenden Rippe 29, beispielsweise aus Blech, versehen, welche die Oberfläche der Rohre 75 in bekannter Weise vergrössert. In den Rohren 75 befinden sich elektrische, etwa zylinderförmige Heizer 78, deren elektrische Anschlüsse 28 aus dem Mantel 72 beidseitig ragen. Diese Anschlüsse 28 sind im Inneren der Erhitzergehäuses untereinander elektrisch verbunden und dann sind sie an eine gemeinsame elektrische Speisequelle angeschlossen. Dampf gelangt durch den Eintrittsstutzen 30 in den Mantel 72, wo er gezwungen ist, entlang den durch die Heizer 78 erhitzten Rippen 29 zu strömen. Hierbei nimmt die Temperatur von Dampf zu und der auf die gewünschte Temperatur erhitzte Dampf verlässt dann den zweiten Erhitzer 6 durch den Austrittsstutzen 31.

Das Gehäuse dieses Erhitzers 6 ist mit Konsolen 33 und 34 versehen, die die Befestigung des Gehäuses diese Erhitzers 6 im Dämpfergehäuse 1 erlauben. Vorteilhaft weist das Erhitzergehäuse einen hohlen Hauptteil 35 auf (Fig. 5), in den ein Deckel 36 eingelegt ist, wobei die Ränder 37 dieser beiden Teile, beispielsweise durch Schweissen, miteinander verbunden sind. Der zweite Erhitzer 6 ist ebenfalls mit einem Temperaturfühler 70 versehen, der Auskunft über die Temperatur des sich in diesem befindlichen Dampfes an die Steuervorrichtung 9 liefert.

In Fig. 6 ist nur jener Teil des Gehäuses 1 des Dämpfers dargestellt, an den die Tür 2 über Scharniere 38 und 39 in bekannter Weise angeschlossen ist. Die Tür 2 weist einen schalenförmigen Hauptteil 40 auf. Vom Boden 41 dieses Hauptteiles 40 weg stehen Distanzstücke 42 ab, die entlang den Seitenwänden 43 des Hauptteiles 40 verteilt sind. Die freien Enden der Distanzstücke 42 sind mit Gewindebohrungen versehen und auf diesen Endpartien der Distanzstücke 42 liegt eine plattenförmige Innenverkleidung 44 der Tür 2 auf. Mit Hilfe von Schrauben (nicht dargestellt) ist diese Innenverkleidung 44 mit den Distanzstücken 42 verbunden. Die Randpartie der Innenverkleidung 44 ist mit einer Reihe von Bohrungen versehen und auf dieser Randpartie liegt eine umlaufende wulstförmige Dichtung 45 mit ihrem Flachteil 46 auf. Auf dem Flachteil 46 befindet sich ein Rahmen 47. Mit Hilfe von Schrauben 48 ist die Dichtung 45 zwischen dem Rahmen 4 und dem Rand der Innenverkleidung 44 geklemmt und somit an Ort und Stelle gehalten. Die obere und die untere Seitenwand 43 des Türhauptteiles 40 ist mit Hilfe von Zapfen 49 an die Scharnierbleche 38 und 39 drehbar angeschlossen. Diese Bleche 38 und 39 sind mittels Schrauben 50 an dem Dämpfergehäuse 1 angeschlossen. Die Tür 3 kann mit einem bekannten Türgriff versehen sein.

Der Mantel des Garraumes 2 besteht aus zwei Wänden 55 und 56, die eine möglichst gute Wärmeisolation des Innenraumes 57 des Garers sicherstellen sollen. An den Behälter 2 schliesst sich im Bereich der Hinterwand unten in der Mitte ein Abflussrohr 58 an, das mit einem elektronisch gesteuerten Ventil 59 sowie mit einer Geruchsperre 60 versehen ist. Vorne ist der Garraum 2 mit Hilfe der bereits beschriebenen Tür 3 verschliessbar.

Im Inneren 57 des Garraumes 2 befindet sich das bereits erwähnte Verteilorgan 4 für den durch das Rohr 8 zugeführten Dampf. Dieses im wesentlichen als ein Rohr ausgebildete Organ 4 ist etwa U-förmig, so dass es zwei Schenkel 61 und 62 aufweist, die mit Hilfe eines Steges 63 miteinander verbunden sind. Der Steg 63 bekannt aus zwei Abschnitten 64 und 65, die mittels eines T-Stückes 66 verbunden sind. An die mittlere Partie des T-Stückes 66 schliesst sich das Zuführrohr 8 an. Der Steg 63 des Verteilorgans 4 befindet sich in der Nähe der Hinterwand des Garraumes 2 und seine Längsachse bildet mit der Waagrechten einen Winkel Alpha von etwa 55 Grad (Fig. 7). Der Steg 63 ist so lang ausgeführt, dass die Knie am Ende des Steges 63, wo sich dieser an die Schenkel 61 und 62 auschliesst, im Boden- bzw. Deckenbereich des Garraumes 2 liegen. Die Schenkel 61 und 62 sind den Seitenwänden des Garraumes 2 zugeordnet und sie bilden mit der Waagrechten einen Winkel Beta von etwa 58 Grad. Stirnseitig gesehen, sind die Schenkel 61 und 62 aus der Ebene der U-Form in entgegengesetzten Richtungen ausgebogen. Die Schenkel 61 und 62 erstrecken sich diagonal entlang den Seitenwänden des Garraumes 2. Die Grösse der genannten Winkel Alpha und Beta ist von den Abmessungen des Garraumes 2 weitgehend abhängig. Der Garraum kann vorteilhaft in den normierten Grössen GN 1/2 oder GN 1/1 ausgeführrt sein.

Der jeweilige Schenkel 61 bzw. 62, dessen freies Ende 67 verschlossen ist, weist zwei Reihen bzw. Sätze von Oeffnungen 68 und 69 auf, durch welche Dampf in den Innenraum 57 des Behälters 2 strömen kann. Diese beiden Reihen 68 und 69 von Oeffnungen erstrecken sich in der Längsrichtung der Schenkel 61 und 62. Der erste Satz von Oeffnungen 68 ist in der Umfangsrichtung des jeweiligen Schenkels 61 bzw. 62 so angeordnet, dass die aus diesen Oeffnungen 68 austretenden Dampfstrahlen (nicht dargestellt) einen Winkel kleiner als 90 Grad mit der entsprechenden Seitenwand des Garraumes 2 bilden. Die Folge davon ist, dass diese Dampfstrahlen vielmehr in das Innere des Garraumes 2 und somit von der Tür 3 weg gerichtet sind. Die Reihe der zweiten Oeffnungen 69 ist im jeweiligen Schenkel 61 bzw. 62 in radialer Richtung so angeordnet, dass die daraus austretenden Dampfstrahlen einen Winkel mit der jeweiligen Seitenwand schliessen, der kleiner ist als der Winkel der Dampfstrahlen, die aus den ersten Oeffnungen 68 austreten. Hinzu kommt, dass die Schenkel 61 und 62 im Innenraum 57 diagonal verlaufen und dies hat zur Folge, dass eine Wirbel aus Dampf im Inneren 57 des Garraumes gebildet wird, der gegen die Mündung des Abflussrohres 58 im Behälter 2 gerichtet ist. So erreicht man mit einem stillstehenden Verteilorgan 4 eine Verwirbelung von Dampf, was das Druchdringen von Dampf bis zu den einzelnen Nahrungskomponenten begünstigt. Ausserdem vermindert diese Massnahme das Ausströmen von Dampf aus dem Garraum durch die Türöffnung.

Die Arbeitsweise der Steuervorrichtung 9 lässt sich mit Hilfe eines Regulierorganes 71 ändern, das in Fig. 1 als ein Regulierknopf an der Steuervorrichtung 9 angedeutet ist. Mit Hilfe dieses Regulierorganes 71 lässt sich die Temperatur von in den Garraum 2 strömendem Dampf ändern. Dies bietet beispielsweise die Möglichkeit, die Temperatur von Dampf bei grösseren Mengen von Behandlungsgut zu erhöhen, so dass die Behandlungszeit von Speisen von der Menge derselben praktisch unabhängig ist. Zudem ist die Steuervorrichtung 9 so ausgeführt, dass die Temperatur von Dampf sich stufenlos einstellen lässt.

Dies ermöglicht eine an die jeweilige Menge und Art des Behandlungsgutes genau angepasste Einstellung der Dampftemperatur.

Wie aus dem Vorstehenden hervorgeht, erfolgt die Erzeugung von Dampf, der in den Garraum 2 strömt, in zwei Erhitzern 5 und 6. Im ersten Erhitzer 5 wird Nassdampf aus Leitungswasser oder dgl. hergestellt. Hierbei wird Kalkstein ausgeschieden, der im ersten Erhitzer 5 Schichten auf den Wänden desselben, auf den Heizkörpern 12 uzw. bildet. Der aus dem ersten Erhitzer 5 austretende Dampf ist frei von jeglichen Mineralien, so dass im zweiten Erhitzer 6 und weiter keine Kalksteinablagerungen entstehen können. In diesem Bereich des Dämpfers kann es somit keine Ursache für die Beeinträchtigung des Betriebes des Dämpfers durch Kalkstein geben.

Um den Kalkstein aus dem ersten Erhitzer 5 zu entfernen, weist dieser den Einfüllstutzen 19 in seinem Deckel 20 auf, durch welchen eine Entkalkungssubstanz in den Kessel 10 eingefüllt werden kann. Das kalkhaltige und mit der Entkalkungssubstanz vermischte Wasser kann durch das Auslassrohr 11 aus dem Kessel 10 wahlweise abgelassen werden. Während der Entkalkung wird der Flüssigkeitspegel 14 im Kessel 10 vorteilhaft erhöht. Das Entkalkungsprogramm kann so entworfen werden, dass der Pegelmesser 16 mit einer vorbestimmten Verzögerung arbeitet und dass dadurch die Entkalkung auch in jenem Bereich stattfindet, der oberhalb des betriebsmässigen Pegels 14 von Wasser im Kessel 10 liegt. Sollte es erforderlich sein, beispielsweise die Heizkörper 12 zu ersetzen, so sind diese nach Entfernung des angeschraubten Deckes 20 leicht zugänglich.

Der Heizkörper 32 im zweiten Erhitzer 6 weist eine kleine Masse und eine vergrösserte Oberfläche auf. Zudem können auf diesem keine Kalksteinablagerungen entstehen, wie bereits erläutert worden ist. Dies ermöglicht, die Temperatur des in diesem zweiten Erhitzer 6 vorhanden Dampfes praktisch verzögerungsfrei zu ändern. Durch die im zweiten Erhitzer 6 erfolgte Erhitzung von Dampf entsteht in diesem auch ein entsprechender Druck, der für die Entstehung des bereits erwähnten Wirbelstromes im Inneren 57 des Garraumes 2 erforderlich ist.

Die zweistufige Herstellung von Behandlungsdampf ermöglicht, die Temperatur desselben zu ändern. Im ersten Erhitzer 5 wird Dampf mit einer konstanten Temperatur von ungefähr 95 Grad Celsius hergestellt. Hierbei wird Kalkstein abgeschieden. Dieser Dampf wird dann dem zweiten Erhitzer 6 zugeführt, bei welchem die Temperatur des Heizkörpers 32 durch die Steuervorrichtung 9 regulierbar ist. Durch die Steuerung dieses Heizkörpers 32 kann man die Temperatur des in den Garraum 2 strömenden Dampfes ändern und auch genau einstellen. Die technischen Mittel, die die Steuervorrichtung zu diesem Zweck enthält, sind an sich bekannt. Da im zweiten Erhitzer 6 keine Kalksteinablagerungen entstehen könne, ist die Einstellung der gewünschten Dampftemperatur auch während eines Langzeitbetriebs des Dämpfers ohne weiteres möglich. Die Temperatur des Behandlungsdampfes kann beispielsweise im Bereich von 190 Grad Celsius liegen.

Es versteht sich, dass durch die Steuervorrichtung 9 nicht nur die dargestellten Ventile 18 und ˙59 sondern auch jene Ventile betätigt werden, die einfachheitshalber in den Zeichnungen nicht dargestellt sind.

**Patentansprüche**

1. Dämpfer mit einem Behälter (2), welcher zur Aufnahme der zu behandelnden Nahrungsmittel bestimmt ist, wobei dieser Behälter vorne mit Hilfe einer Tür (3) verschliessbar ist, mit einem Dampferzeuger, welcher einen Erhitzer (5) enthält, dessen Einlass an eine Kaltwasserzuleitung (17) angeschlossen ist, und mit einer Steuervorrichtung (9), welche die Zusammenarbeit der einzelnen Bestandteile des Dämpfers steuert, und wobei der Dampferzeuger einen zweiten Erhitzer (6) aufweist, der zur Erhitzung des aus dem ersten Erhitzer (5) austretenden Dampfes bestimmt ist, dadurch gekennzeichnet, dass der Einlass des zweiten Erhitzers (6) mit Hilfe eines ersten Rohres (7) an den Auslass aus dem ersten Erhitzer (5) angeschlossen ist, dass der Auslass des zweiten Erhitzers (6) über ein zweites Rohr (8) an einen Dampfverteiler (4) angeschlossen ist, wobei dieser Verteiler im Inneren des Behälters (2) angeordnet ist, dass der Verteiler (4) Schenkel (61, 62) aufweist, die derart ausgeführt sind, dass Dampf in den Behälter an mehreren Stellen desselben eintreten kann, und dass diese Stellen entlang den Wänden des Behälters verteilt sind.

2. Dämpfer nach Anspruch 1, dadurch gekennzeichnet, dass der erste Erhitzer (5) einen im wesentlichen zylinderförmigen Kessel (10) aufweist, dass die Achse dieses Kessels (10) vertikal verläuft, dass stabförmige Heizkörper (12) im unteren Bereich des Kessels (10) angeordnet sind, dass ein Pegelabtaster (16) über den oberen Enden (15) der Heizelemente (12) angeordnet ist, dass dieser Abtaster (16) am Kessel (10) befestigt ist und eine Sonde (23) umfasst, welche an die Steuervorrichtung angeschlossen ist.

3. Dämpfer nach Anspruch 2, dadurch gekennzeichnet, dass der untere Bereich des Kessels (10) mit einem Auslass (11) versehen ist, welcher wahlweise geöffnet werden kann, dass ein Stutzen (19) zur Einführung einer Entkalkungssubstanz im oberen Bereich bzw. am abnehmbaren Deckel (20) des Kessels (10) vorgesehen ist, und dass das Kalkstein enthaltende Wasser, welches mit der Entkalkungssubstanz vermischt ist, wahlweise aus dem Kessel (10) durch das Auslassrohr (11) abgelassen werden kann.

4. Dämpfer nach Anspruch 2, dadurch gekennzeichnet, dass die stabförmigen elektrischen Heizelemente (12) im wesentlichen U-förmig sind, dass diese vertikal angeordnet sind und zueinander praktisch parallel verlaufen, dass die unteren Enden (13) der Heizelemente im Boden des Kessels befestigt sind, und dass ein Teil der unteren Stabenden, welcher sich ausserhalb des Kessels befindet, als eine Anschlusstelle (13) für Drähte ausgeführt ist, durch welche die Heizer (5) mit elektrischer Energie versorgt werden können.

5. Dämpfer nach Anspruch 1, dadurch gekennzeichnet, dass ein Temperaturfühler (22) sich durch den Kessel (10) erstreckt, dass dieser Fühler im Boden des Kessels (10) befestigt ist und dass dieser an die Steuervorrichtung angeschlossen ist.

6. Dämpfer nach Anspruch 2, dadurch gekennzeichnet, dass der Pegelmesser (16) ein praktisch U-förmiges Rohr aufweist, welches an der Aussenseite des Gehäuses des Kessels (10) angebracht ist und in dieses beiderends mündet, dass dieses Rohr zwei gekrümmte Schenkel (24, 25) aufweist, welche über eines der Enden derselben an das Gehäuse des Kessels angeschlossen ist, dass ein geradliniges rohrförmiges Stück (26) vorgesehen ist, welches zwischen den zweiten Enden der Schenkel (24, 25) geschaltet ist, dass die Sonde (23) im wesentlichen stabförmig ist, dass die Längsachse derselben praktisch parallel zur Längsachse des Kessels (19) verläuft, und dass eine solche Sonde (23) durch den oberen Schenkel (24) des U-förmigen Rohres hindurchgeht.

7. Dämpfer nach Anspruch 1, dadurch gekennzeichnet, dass der zweite Erhitzer (6) einen meanderförmigen Mantel (72) aufweist, in dem wenigstens ein Heizelement (32) angeordnet ist, dass der Anfang und das Ende dieses Mantels (72) an die Verbindungsrohre (7, 8) angeschlossen sind und dass der zweite Erhitzer (6) mit einem Temperaturfühler (70) versehen sein kann, welcher Auskunft an die Steuervorrichtung (9) über die Temperatur von Dampf im zweiten Erhitzer liefert.

8. Dämpfer nach Anspruch 7, dadurch gekennzeichnet, dass der Mantel (72) längere parallele Abschnitte (73) und kürzere parallele Abschnitte (74) aufweist, dass die kurzen Abschnitte (74) als Verbindungskanäle für die längeren Abschnitte (73) dienen und an die Endwände (76, 77) des Mantels (72) luftdicht angeschlossen sind, und dass die Heizungselemente (78) in den Rohren (75) untergebracht sind.

9. Dämpfer nach Anspruch 8, dadurch gekennzeichnet, dass die innere Oberfläche der längeren Abschnitte (73) der Rohre (75) mit einer umlaufenden Rippe (29) versehen ist, welche vorteilhaft aus Blech ist.

10. Dämpfer nach Anspruch 1, dadurch gekennzeichnet, dass die Tür (2) einen schalenförmigen Hauptteil (40) aufweist, dass Abstandsstücke (42) vom Boden dieses Hauptteiles (40) abstehen, dass eine plattenförmige Innenverkleidung (44) auf den freien Enden der Abstandsstücke (42) ruht, dass der flache Teil (46) einer umlaufenden wulstförmigen Dichtung (45) auf der Randpartie der Verkleidung (44) aufliegt, dass ein Rahmen (47) auf dem flachen Teil (46) der Dichtung (45) angeordnet ist, und dass der flache Teil (46) zwischen dem Rahmen (47) und der inneren Verkleidung (44) mit Hilfe von Schrauben (48) geklemmt ist.

11. Dämpfer nach Anspruch 1, dadurch gekennzeichnet, dass ein Abflusrohr (58) an den Behälter (2) angeschlossen ist, und zwar unten in der Mitte der Hinterwand desselben, und dass dieses Abflussrohr (58) mit einem elektronisch steuerbaren Ventil (59) sowie mit einer Geruchssperre (60) ausgerüstet ist.

12. Dämpfer nach Anspruch 1, dadurch gekennzeichnet, dass das Verteilorgan (4) für Dampf als ein etwa U-förmiges Rohr mit zwei Schenkeln (61, 62) ausgeführt ist, dass diese Schenkel untereinander mit Hilfe eines Steges (63) verbunden sind, dass dieser Steg der Hinterwand des Behälters (2) zugeordnet und an das zweite Speiserohr (8) angeschlossen ist, dass die Längsachse des Steges einen Winkel Alpha von vorteilhaft 55 Grad mit einer Waagerechten bildet, dass die Schenkel (61, 62), welche sich an die Enden des Steges (63) anschliessen, den Seitenwänden des Behälters (2) zugeordnet sind und dass sie aus der Ebene der U-Form herausgebogen sind, so dass sie sich diagonal entlang den Seitenwänden erstrecken.

13. Dämpfer nach Anspruch 12, dadurch gekennzeichnet, dass das freie Ende der Schenkel (61, 62) geschlossen ist, dass der jeweilige Schenkel zwei Reihen oder Sätze von Oeffnungen (68, 69) aufweist, durch welche Dampf in das Innere des Behälters (2) gelangen kann, dass die zwei Reihen der Oeffnungen (68, 69) sich in der Längsrichtung der Schenkel (61, 62) erstrecken, dass der erste Satz von Oeffnungen (68) in der Umfangsrichtung des betreffenden Schenkels so angeordnet ist, dass die aus diesen Oeffnungen austretenden Dampfstrahlen einen Winkel kleiner als 90 Grad mit der entsprechenden Seitenwand bilden, dass die zweite Reihe der Oeffnungen (69) in radialer Richtung des betreffenden Schenkels so angeordnet ist, dass die daraus austretenden Dampfstrahlen einen Winkel mit der jeweiligen Seitenwand schliessen, der kleiner ist als der Winkel der Dampfstrahlen, die aus den ersten Oeffnungen austreten.

14. Dämpfer nach Anspruch 12, dadurch gekennzeichnet, dass der Steg (63) so lang ausgeführt ist, dass die Kniestücke am Ende desselben im Boden- bzw. Deckenbereich des Garraumes (2) liegen und dass die Schenkel (61, 62) einen Winkel Beta von vorteilhaft 58 Grad mit einer Waagrechten bilden.

**Revendications**

1. Etuve de cuisson à vapeur comprenant un récipient (2) destiné à recevoir les aliments à traiter, ledit récipient pouvant être fermé devant à l'aide d'une porte (3), comprenant un générateur de vapeur muni d'un élément chauffant (5) dont l'entrée est reliée à une amenée d'eau froide (17), et un dispositif de commande (9) commandant la coopération des différents composants de l'étuve de cuisson à vapeur, le générateur de vapeur étant muni d'un deuxième élément chauffant (6) destiné à chauffer la vapeur sortant du premier élément chauffant (5), caractérisée en ce que l'entrée du deuxième élément chauffant (6) est reliée à l'aide d'un premier tube (7) à la sortie du premier élément chauffant (5), en ce que la sortie du deuxième élément chauffant (6) est reliée par un deuxième tube (8) à un diffuseur de vapeur (4), ledit diffuseur étant logé à l'intérieur du récipient (2), en ce que le diffuseur (4) présente des branches (61, 62) réalisées de manière à permettre l'entrée de la vapeur dans le récipient à plusieurs endroits de ce dernier, et en ce que ces endroits sont répartis le long des parois du récipient.

2. Etuve de cuisson à vapeur selon la revendication 1, caractérisée en ce que le premier élément chauffant (5) comporte une cuve (10) essentiellement cylindrique, en ce que l'axe de cette cuve (10) s'étend verticalement, en ce que des corps chauffants en forme de tige (12) sont disposés dans la zone inférieure de la cuve (10), en ce qu'un détecteur de niveau (16) est monté au-dessus des extrémités supérieures (15) des éléments chauffants (12), en ce que ce détecteur (16) est fixé sur la cuve (10) et comporte une sonde (23) reliée au dispositif de commande.

3. Etuve de cuisson à vapeur selon la revendication 2, caractérisée en ce que la zone inférieure de la cuve (10) présente une sortie (11) pouvant être facultativement ouverte, en ce qu'un tubulure (19) est prévue pour l'introduction d'une matière détartrante dans la zone supérieure, respectivement sur le couvercle (20) pouvant être enlevé de la cuve (10), et en ce que l'eau contenant du calcaire mélangée à la matière détartrante peut être facultativement évacuée de la cuve (10) par le tuyau de sortie (11).

4. Etuve de cuisson à vapeur selon la revendication 2, caractérisée en ce que les éléments chauffants électriques en forme de tige (12) ont essentiellement une forme en U, en ce que ces derniers sont disposés verticalement et sont pratiquement parallèles les uns par rapport aux autres, en ce que les extrémités inférieures (13) des éléments chauffants sont fixées dans le fond de la cuve, et en ce qu'une partie des extrémités inférieures des tiges se trouvant à l'extérieur de la cuve est réalisée en tant qu'endroit de raccordement (13) pour des fils métalliques par lesquels les éléments chauffants (5) peuvent être alimentés en énergie électrique.

5. Etuve de cuisson à vapeur selon la revendication 1, caractérisée en ce qu'un capteur de température (22) s'étend à travers la cuve (10), en ce que ce capteur est fixé dans le fond de la cuve (10) et en ce que ce dernier est raccordé au dispositif de commande.

6. Etuve de cuisson à vapeur selon la revendication 2, caractérisée en ce que le détecteur de niveau (16) présente un tuyau affectant pratiquement la forme d'un U fixé à la paroi extérieure du bâti de la cuve (10) et débouche dans ce dernier par ces deux extrémités, en ce que ce tuyau présente deux branches courbées (pliées) (24, 25), reliées au bâti de la cuve par l'une des extrémités de celles-ci, en ce qu'il est prévu un tronçon rectiligne tubulaire (26) relié entre les deuxièmes extrémités des branches (24, 25), en ce que la sonde (23) a sensiblement la forme d'une tige, en ce que l'axe longitudinal de cette dernière s'étend pratiquement de façon parallèle à l'axe longitudinal de la cuve (10), et en ce qu'une telle sonde (23) traverse la branche supérieure (24) du tuyau en forme de U.

7. Etuve de cuisson à vapeur selon la revendication 1, caractérisée en ce que le second élément chauffant (6) présente une enveloppe sinueuse (72) dans laquelle est prévu au moins un élément chauffant (32), en ce que le début et la fin de cette enveloppe (72) sont reliés aux tubes de raccordement (7, 8) et en ce que le deuxième élément chauffant (6) peut comporter un capteur de température (70) fournissant au dispositif de commande (9) des renseignements concernant la température de la vapeur dans le deuxième élément chauffant.

8. Etuve de cuisson à vapeur selon la revendication 7, caractérisée en ce que l'enveloppe (72) présente des tronçons parallèles plus longs (73) et des tronçons parallèles plus courts (74), en ce que les tronçons courts (74) servent de conduits de liaisons aux tronçons plus longs (73) et sont reliés aux parois terminales (76, 77) de l'enveloppe (72) de manière étanche à l'air, et en ce que les éléments chauffants (78) sont montés dans les tubes (75).

9. Etuve de cuisson à vapeur selon la revendication 8, caractérisée en ce que la surface intérieure des tronçons plus longs (73) des tubes (75) est munie d'une ailette (29) qui l'entoure, réalisée de préférence en tôle.

10. Etuve de cuisson à vapeur selon la revendication 1, caractérisée en ce que la porte (3) présente une partie principale (40) en forme de cuvette, en ce que des entretoises (42) font saillie du fond de cette partie principale (40), en ce qu'un revêtement intérieur (44) en forme de plaques repose sur les extrémités libres des entretoises (42), en ce que la partie plane (46) d'un joint torique (45) qui l'entoure repose sur la partie du bord du revêtement (44), en ce qu'un cadre (47) est prévu sur la partie plane (46) du joint (45) et en ce que la partie plane (46) est maintenue serrée entre le cadre (47) et le revêtement intérieur (44) à l'aide de vis (48).

11. Etuve de cuisson à vapeur selon la revendication 1, caractérisée en ce qu'un tuyau d'évacuation (58) est relié au récipient (2) à savoir en bas au milieu de la paroi arrière de ce dernier, et en ce que ce tuyau d'évacuation (58) est muni d'une vanne (59) pouvant être commandée électroniquement ainsi que d'un dispositif (60) arrêtant les odeurs.

12. Etuve de cuisson à vapeur selon la revendication 1, caractérisée en ce qu'un organe de diffusion (4) pour de la vapeur est réalisé en tant que tuyau ayant sensiblement la forme d'un U à deux branches (61, 62), en ce que ces branches sont reliées l'une à l'autre à l'aide d'une traverse (63), en ce que cette traverse est associée à la paroi arrière du récipient (2) et en ce qu'elle est reliée au deuxième tube (8), en ce que l'axe longitudinal de la traverse forme un angle alpha, de préférence, de 55 degrés, avec une horizontale, en ce que les branches (61, 62) raccordées aux extrémités de la traverse (63), sont associées aux parois latérales du récipient (2) et en ce qu'elles sont pliées en faisant saillie du plan de la forme en U, de façon à s'étendre diagonalement le long des parois latérales.

13. Etuve de cuisson à vapeur selon la revendication 12, caractérisée en ce que l'extrémité libre des branches (61, 62) est fermée, en ce que la branche respective présente deux rangées ou jeux d'ouvertures (68, 69) permettant l'arrivée de la vapeur à l'intérieur du récipient (2), en ce que les deux rangées d'ouvertures (68, 69) s'étendent dans le sens longitudinal des branches (61, 62), en ce que le premier jeu d'ouvertures (68) est disposé dans la direction périphérique de la branche concernée de façon à ce que les jets de vapeur sortant de ces ouvertures forment un angle inférieur à 90 degrés avec la paroi latérale correspondante, en ce que la deuxième rangée d'ouvertures (69) est disposée dans la direction radiale de la branche concernée de façon à ce que les jets de vapeur en sortant ferment un angle avec la paroi latérale respective qui est plus petit que l'angle des jets de vapeur sortant des premières ouvertures.

14. Etuve de cuisson à vapeur selon la revendication 12, caractérisée en ce que la traverse (63) est suffisamment longue pour que les pièces coudées à l'extrémité de celle-ci se trouvent dans la zone du plancher ou du plafond de l'espace de cuisson (2) et en ce que les branches (61, 62) forment un angle béta, de préférence, de 58 degrés avec une horizontale.

**Claims**

1. A steamer having a container (2) intended for receiving the food to be treated whereby this container can be closed at the front by means of a door (3), further having a generator of steam which generator comprises a heater (5) the inlet of which is connected to a cold-water pipe (17), and having a control device (9) which controls the interaction of its individual parts, and whereby the generator further comprises a second heater (6) which serves for heating steam emerging from the first heater (5), wherein the inlet of the second heater (6) is connected by means of a first feeding pipe (7) to the outlet of said first heater (5), the outlet of the second heater (6) is connected via a second feeding pipe (8) to a steam distribution means (4) which is placed inside the container (2) and which is provided with legs (61, 62) whereby these legs are carried out in such a manner that steam introduces the interior of the container (2) at a number of places which are distributed along the walls of the container.

2. A steamer as claimed in claim 1 wherein said first heater (5) has an essentially cylindrical boiler (10), the axis of which is extending vertically, bar-shaped electrical heating elements (12) are arranged in the lower region of the boiler (10), a level meter (16) is placed above of the top ends (15) of the heating elements (12) and wherein this meter (16) is attached to the boiler (10) and comprises a probe (23) connected to the control device (9).

3. A steamer as claimed in claim 2 wherein the lower portion of the boiler (10) is equippped with an outlet (11) which can be closed in a controlled way, a socket (19) for introducing a delimiting substance is provided at the top, at the cover (20) resp., of the boiler (10) and wherein the water containing limestone and mixed with the delimiting substance can be drained off selectively from the boiler (10) through the outlet pipe (11).

4. A steamer as claimed in claim 2 wherein the bar-shaped electrical heating elements (12) are essentially U-shaped, they are arranged vertically and stand approximately parallel to one another, the lower ends (13) of the heating elements are fastened in the bottom of the boiler and wherein that one part of the lower ends which is located outside the boiler is designed as a connection point (13) for wires supplying the heater (5) with electrical energy.

5. A steamer as claimed in claim 1 wherein a temperature sensor (22) extends through the boiler (10) whereby this sensor (22) is fastened in the bottom of the boiler (10) and it is connected to the control device (9).

6. A steamer as claimed in claim 2 wherein the lever meter (16) contains an approximately U-shaped tube attached in flow terms to the outside of the casing of the boiler (10) whereby the both ends of said tube open into the boiler, said tube is composed of two curved legs (24, 25) connected at one end to the boiler casing, and of a straight tubular piece or web (26) connecting the other ends of said legs (24, 25), said probe (23) is essentially bar-shaped, its longitudinal axis is approximately parallel to the longitudinal axis of the boiler (10), and wherein such probe (23) passes through the upper leg (24) of the U-shaped tube.

7. A steamer as claimed in claim 1 wherein the second heater (6) has a meander-shaped casing (72) in which at least one heating element (32) is placed, the start and the end of this casing (72) are connected to the feeding pipes (7, 8) and wherein the second heater (6) is provided with a thermometer probe (70) which gives information about the temperature of steam in the second heater to the control device (9).

8. A steamer as claimed in claim 7 wherein the casing (72) contains longer parallel portions (73) and shorter parallel portions (74), these short portions (74) serve as connecting channels for the longer portions (73), tubes (75) extend through the longer portions (73) and are fastened in an airtight manner to the end walls (76, 77) of the casing (72) and wherein the heating elements (78) are placed in said tubes (75).

9. A steamer as claimed in claim 8 wherein the interior surface of the longer portions of the tubes (75) is provided with an all-round rib (29), preferably made of sheet metal.

10. A steamer as claimed in claim 1 wherein the door (2) has a dish-shaped main part (40), spacer pieces (42) project from the bottom of this main part (40), a plate-shaped inner cladding (44) rests on the free ends of these pieces (42), the flat part (46) of an all-round bead-shaped seal (45) rests on the edge portion of the cladding (44), a frame (47) is arranged on the flat part (46) of the seal (45) and wherein said flat part (46) is clamped between said frame (47) and the inner cladding (44) by means of screws (48).

11. A steamer as claimed in claim 1 wherein a flow-off pipe (58) is connected to the container (2) in the region of the rear wall, at the bottom and in the center thereof and wherein said flow-off pipe (58) is equipped with an electronically controlled valve (59) as well as with an odor trap (60).

12. A steamer as claimed in claim 1 wherein the distribution means (4) for the steam is designed essentially as an U-shaped tube having two legs (61, 62) which are connected to one another by means of a web (63), this web (63) is assigned to the rear wall of the container (2) and connected to the second feeding pipe (8) and its longitudinal axis forms an angle of preferably 55 degrees with the horizontal and wherein said legs (61, 62), which adjoin the ends of the web (63), are assigned to the side walls of the container (2) and they are bent out of the plane of the U-shape in opposite directions, so that they extend diagonally along said side walls.

13. A steamer as claimed in claim 14 wherein the free end (67) of the legs (61, 62) is closed, the legs themselves have two rows or sets of orifices (68, 69) through which the steam can flow into the interior of the container (2), said two rows (68, 69) of the orifices extend in the longitudinal direction of the legs (61, 62), the first set of the orifices (68) is arranged in the peripheral direction of the particular leg in such a way that steam jets issuing from the orifices (68) form an angle of preferably less than 90 degrees with the corresponding side wall, the row of the second orifices (69) is arranged in the particular leg in the radial direction so that the steam jets issuing from them form an angle with the particular side wall which is preferably less than the angle of the steam jets issuing from the first orifices (68).

14. A steamer as claimed in claim 14 wherein the web (63) is made long enough to ensure that the elbows at the ends of the web (63) where the latter adjoins the legs (61, 62) are located respectively in the floor and ceiling regions of the container (2) and wherein these legs (61, 62) from an angle beta of preferably 58 degrees with the horizontal.

Fig. 1

Fig. 7

Fig. 8

Fig. 3

Fig. 2

Fig. 5

Fig. 4

Fig. 6

EP 0 191 267 B1